# EUROPEAN PATENT APPLICATION

(11) **EP 2 995 809 A1**
(43) Date of publication of application: **16.03.2016**
(21) Application number: 14184529.7
(22) Date of filing: 12.09.2014
(51) Int. Cl.: F03D 1/06, G01P 5/00, F03D 7/02

(54) **Obtaining information concerning external conditions at a wind turbine**

(71) Applicant: Siemens Aktiengesellschaft, 80333 München (DE)
(72) Inventor: Andersen, Kurt, 6623 Vorbasse (DK); Egedal, Per, 7400 Herning (DK); Munk-Hansen, Thorkil, 7323 Give (DK); Stiesdal, Henrik, 5000 Odense C (DK)

(57) **Abstract**

A device (310) for obtaining information concerning at least one external condition at a wind turbine (100) is provided, comprising
at least one capture element (320) suitable for being fixed at an upwind side of a rotor plane (140) of the wind turbine (100), wherein
- the at least one capture element (320) comprises at least one channel (321)
- with at least one opening (322) for obtaining the information at the upwind side of the rotor plane (140),
- a part (333) of the channel (321) with the at least one opening (322) substantially points towards a downwind direction (141) of the wind turbine (100),
- a longitudinal axis (340) of the part (333) of the channel (321) is substantially parallel to a rotation axis (142) of the rotor plane (140).

Further, a device and a wind turbine are suggested.

## Description

The invention relates to a device and to a system for obtaining information concerning at least one external condition at a wind turbine. Further a wind turbine is suggested.

A wind turbine in operation will not always experience wind perpendicular to a rotor plane. When the rotor plane (which is also referred to as "heading" or "facing") of a wind turbine is not substantially perpendicular to the wind, the efficiency like, e.g., an Annual Energy Production (AEP) will decrease. Further to that, a fatigue loading of the wind turbine may increase due to an incorrect adjustment of the wind turbine towards the wind, i.e. towards the incoming wind direction.

Therefore, actual wind turbines comprise a yaw system designed to automatically adjust their heading, like, e.g., rotating the rotor plane (also referred to as "yawing") perpendicular to the incoming wind or to maintain an angle relative to the wind to maximize the surface area of the turbine rotor.

Usually, the yaw system is part of a nacelle, which may be involved in a yawing movement, i.e. being rotatable mounted on top of a tower via at least one yaw bearing. A rotor is attached to an upwind side of the nacelle. The rotor is coupled, e.g., via a drive train to a generator housed inside the nacelle. The rotor includes a central rotor hub and a plurality of blades mounted to and extending radially from the rotor hub defining the rotor plane. A spinner is attached centrally in front of the rotor to streamline the flow of air around the rotor hub.

One exemplary existing solution for estimating a momentary wind direction is based on information or data provided by a weather station mounted on top of the nacelle. For example, a wind vane may be used for providing the relevant information to estimate the wind direction, thereby processing the provided information into control information steering the yaw system.

However, information provided by such a weather station is inaccurate since turbulence caused by the rotor blades means that the data collected by the weather station does not reflect the actual, i.e. true situation at the front side of the wind turbine or in the rotor plane. As a result of these inaccuracies, the yawing of the rotor plane might be incorrect (also referred to as "yaw error") causing the nacelle, spinner and rotor plane not facing directly into the wind and thus resulting in a significant ARP.

[EP 2 749 766 A1] relates to a yaw error determination unit for determining a degree of yaw error of a wind turbine based on wind pressure measurement values obtained from a number of measurement points located at the front side of the rotor plane.

However, this solution has not been matured to a level having a desired resistance against external conditions, in particular against weather conditions like, e.g., rain and ice.

The object is thus to overcome such disadvantages and in particular to provide an improved approach for a correct adjustment or yawing of a wind turbine.

This problem is solved according to the features of the independent claims. Further embodiments result from the depending claims.

In order to overcome this problem, a device is provided for obtaining information concerning at least one external condition at a wind turbine, comprising
at least one capture element suitable for being fixed at an upwind side of a rotor plane of the wind turbine, wherein
- the at least one capture element comprises at least one channel
- with at least one opening for obtaining the information at the upwind side of the rotor plane,
- a part of the channel with the at least one opening substantially points towards a downwind direction of the wind turbine,
- a longitudinal axis of the part of the channel is substantially parallel to a rotation axis of the rotor plane.

The proposed device may be fixed or mounted at the upwind side of a rotor plane like, e.g., at a front side of a rotor. Due to the substantial parallelism to the rotation axis of the rotor plane, the longitudinal axis of the part of the channel pointing towards the downwind direction is declining according to the tilt angle of the wind turbine. As a consequence, in combination with gravity force, disturbing objects like water or dust will be led out of the channel. This ensures, that the channel is mainly free of such disturbing objects, in particular during bad weather conditions (like rain and wind) and thus securing an effective processing of information obtained at that upwind side of the rotor plane.

An external condition may be every condition concerning climate or weather in the environment of the wind turbine like, e.g.
- a temperature,
- a humidity,
- a wind or air pressure,
- a wind speed, or
- a wind direction.

Such conditions like, e.g., climatic- or weather conditions may be represented by air actually situated at the upwind side of the rotor plane wherein the information concerning these conditions may be processed as parameters or measurement values.

In an embodiment, the at least one capture element comprises
- a pipe, or
- a tube, or
- a rod.

In another embodiment, the device is suitable to be fixed at a front side of a spinner of the wind turbine.

In a further embodiment, the longitudinal axis of the part of the channel is substantially parallel to a tilt angle of the wind turbine.

In a next embodiment, the at least one capture element is designed for capturing air via the at least one opening at the upwind side of the rotor plane and guiding the air along the at least one channel towards at least one further opening at the other end of the channel.

It is also an embodiment that the device comprises at least one measurement device communicating with the at least one further opening of the at least one channel, the at least one measurement device is suitable for providing measurement values concerning the at least one external condition based on the air provided via the at least one further opening of the at least one channel.

"Communication" may be any kind of connection between the at least one channel and the at least one measurement device suitable for guiding captured air from the at least one further opening of the channel to the at least one measurement device. Exemplary embodiments of such a connection may be a flexible tube or hose.

Pursuant to another embodiment, the at least one measurement device is designed for providing measurement values concerning at least one out of the following external conditions:
- temperature,
- humidity,
- wind or air pressure,
- wind speed, or
- wind direction.

According to an embodiment, the at least one measurement device comprises at least one sensor.

The sensor may be part of the device almost directly attached to the at least one further opening.

According to another embodiment, the device comprises at least one heating element. With that, potential ice caused by cold weather conditions blocking the channel can be avoided.

In addition, the problem stated above is also solved by a system for obtaining information concerning at least one external condition at a wind turbine, comprising
- at least one device as described herein, and
- at least one measurement device communicating with the at least one channel of the at least one capture element,
- the measurement device is suitable for providing measurement values concerning the at least one external condition based on information provided via the at least one channel.

In contrast to the aforementioned device the measurement device of the system may communicate with the at least one channel of the at least one capture element, e.g., via flexible tubes or hoses and is therefore not part of the device. Thus, the measurement device like, e.g., a sensor may extract the measurement values remotely from the device or channel.

The problem mentioned supra is also solved by a wind turbine comprising
- at least one device as described herein, or
- at least one system as described herein.

Embodiments of the invention are shown and illustrated in the following figures:
- Fig.1: shows in a schematic side view a possible configuration a wind turbine including several devices according to the proposed solution;
- Fig.2: shows a detailed perspective view of the exemplary scenario at the front side of the spinner as schematically indicated in Fig.1;
- Fig.3: shows a detailed side view of an exemplary embodiment of the device according to the proposed solution;
- Fig.4: shows an exemplary scenario including two bended pipes according to the proposed solution.

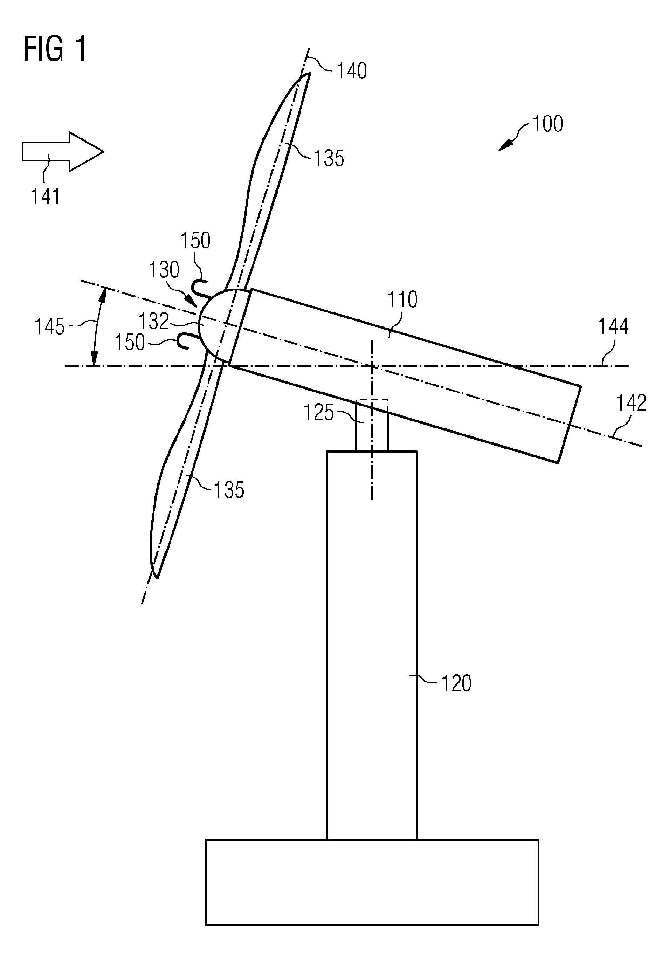

**Fig.1** shows in a schematic side view a possible configuration of a wind turbine 100 including several devices 150 according to the proposed solution.

Thereby, the wind turbine 100 comprises a nacelle 110 being rotatable mounted on top of a tower 120 via a yawing system 125. A rotor 130 is attached to an upwind side of the nacelle 110. The rotor 130 includes a central rotor hub and a plurality of blades 135 mounted to and extending radially from the rotor hub defining a rotor plane 140. Further, a spinner 132 is attached at an upwind side of the rotor 130 covering the rotor hub to streamline a flow of air around the rotor hub.

The blades 135 are rotating around a rotation axis 142 of the rotor hub or spinner 132 wherein the rotation axis 142 is substantially perpendicular to the rotor plane 140.

An angle between a horizontal axis 144 of the nacelle 110 and the rotation axis 142 is defined as a tilt angle 145.

The yawing system 125 of the nacelle 110 may be involved in a yawing movement, e.g., rotating the rotor plane 140 best possible perpendicular to an incoming wind which is indicated by an arrow 141.

The devices 150 (wherein only two of them are visible in Fig.1) are fixed or mounted at a front side of the spinner 132, each device 150 is suitable for capturing, i.e. obtaining information concerning at least one external condition at the upwind side of the rotor 130 or spinner 132.

Examples for an external condition may be every condition concerning climate or weather like, e.g.
- a temperature,
- a humidity,
- a wind pressure,
- a wind speed, or
- a wind direction.

Such conditions like, e.g., climatic- or weather conditions may be represented by air actually situated at the upwind side of the rotor 130 wherein the information concerning these conditions may be processed as parameters or measurement values.

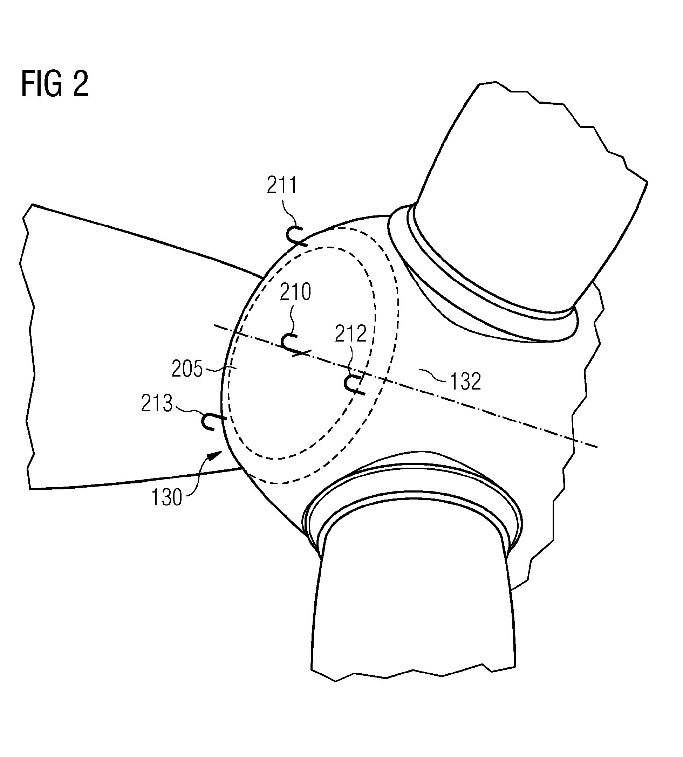

**Fig.2** shows a detailed perspective view of the exemplary scenario at the front side of the spinner 132 as schematically indicated in Fig.1. Thereby a device 210 according to the proposed solution is located centrally at the front side of the spinner 132. Additional three devices 211,...,213 are distributed within an edge area 205 (indicated by a broken line in Fig.2) of the spinner 132.

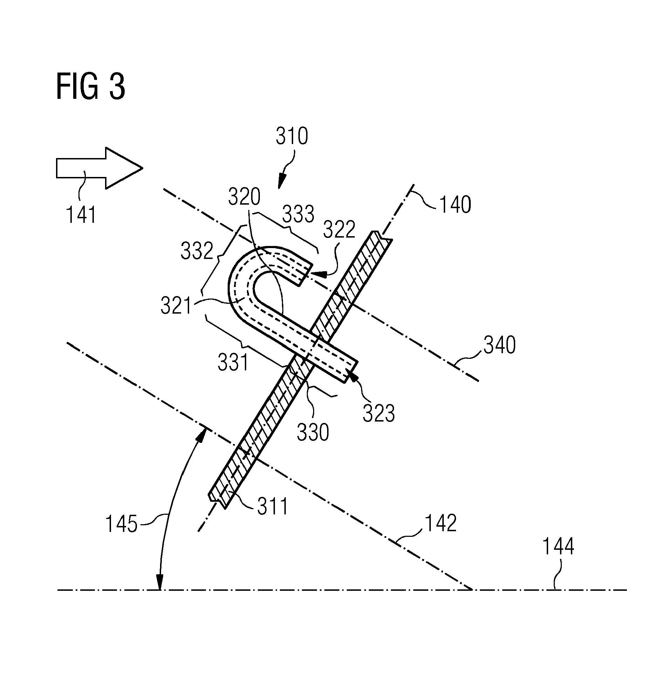

**Fig.3** shows a detailed side view of an exemplary embodiment of the device according to the proposed solution. Thereby, the device 310 comprises a bended pipe 320 as a capture element including a channel 321 (visualized with a broken line) and two openings 322, 323 located at both ends of the channel 321. Further, the pipe 321 is designed in a way that it might be fixed at the front side of the spinner (only a part of a front plate 311 of the spinner is illustrated in Fig.3) thereby guiding a part 330 of the channel 321 through the front plate 311 in a way that the opening 323 is pointing towards an interior of the spinner or rotor hub.

Furthermore, a part 331 of the channel 321 is guided towards an upwind direction at which the pipe 320 is formed in a way, that a direction of a further part 332 of the channel 321 is reversing towards the downwind direction 141 resulting in a direction of a further part 333 of the channel 321 including the opening 322 substantially towards the downwind direction 141 and thus substantially towards the rotor plane 140.

Based on this exemplary constellation of the device 310 as shown in Fig.3 any information may be obtained or captured at the upwind side of the rotor plane 140, i.e. from the front side of the spinner 132, by, e.g., capturing air representing climatic conditions at the opening 322, thereby guiding the air through the channel 321 and providing the air via the opening 323 within the interior of the rotor hub.

According to an advanced embodiment of the scenario as shown in Fig.3, the opening 323 may be communicating with at least one sensor extracting at least one of the provided parameters like, e.g., the wind pressure. As an example, the sensor may be a part of the device 310 directly attached at the opening 323.

Alternatively the sensor may be part of a yaw error determination unit as disclosed in the aforementioned [EP2749766A1].

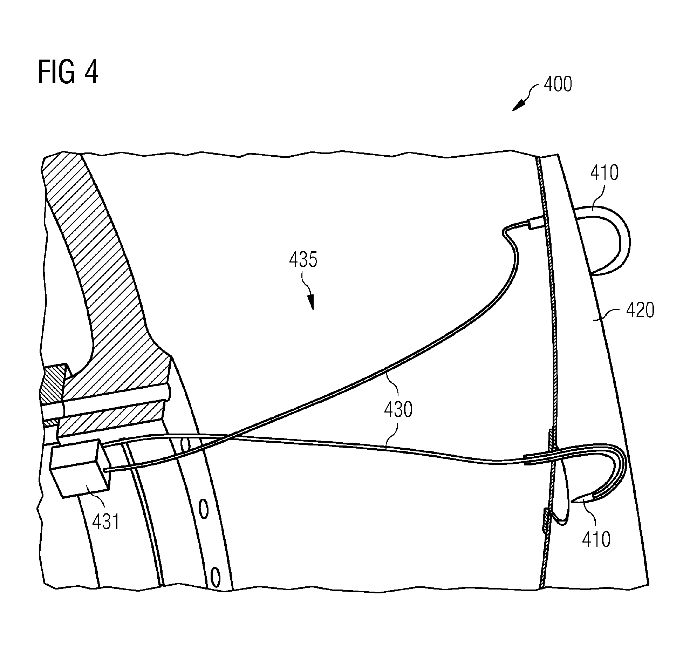

**Fig.4** shows an exemplary scenario 400 including two bended pipes 410 according to the proposed solution, both being fixed at a front plate of a spinner 420. Each of the pipes 410 is communicating via an input arrangement 430 with at least one measurement device comprising, e.g., a sensor 431 located within an interior or spacing 435 of a rotor hub (not shown). As illustrated in Fig.4, the input arrangement comprises, e.g., two flexible tubes or hoses wherein one end of each tube is connected to the sensor 431 and the other end of each tube is implemented in one of the pipes 410. Based on that, air pressure as one example out of several existing external conditions is captured at the front plate 420 of the spinner thereby guided through the pipes 410 and via the tubes 430 to the sensor 431 for extracting measurement values based on the provided air.

As an example, the extracted measurement values may be representing air pressure. According to an exemplary embodiment, an air pressure difference may determined based on the extracted air pressure values provided via the two different pipes 410. Based on a further possible processing of the determined air pressure difference, a yaw error angle of the wind turbine may be derived.

According to an aspect of the proposed solution, a longitudinal axis 340 of the part 333 of the channel 321 pointing towards the downwind direction 141 is substantially parallel to the rotation axis 142 of the rotor plane 140. As a further aspect of the invention, due to the substantial parallelism of the longitudinal axis 340 and the rotation axis 142, the longitudinal axis 340 comprises the same tilt angle 145 in relation to the horizontal axis 144 of the nacelle 110 which might be 6 to 8 degrees.

As a consequence of the decline of at least one part 333 of the channel 321 according to the tilt angle 145 in combination with gravity force, disturbing objects like, e.g., water or dust will be lead out of the channel 321 or pipe 320 even during rotation of the rotor hub and independent from an actual position of the device or the spinner, i.e. independent from an azimuth angle of the rotor hub or spinner 132.

This ensures, that the channel 321 is mainly free of such disturbing object even, e.g., under bad weather conditions (like rain and wind) and thus securing an effective processing of information obtained at that front side of the spinner.

According to a further advanced embodiment, heating elements may be installed at the device 310, e.g., at the pipe to avoid that potential ice is blocking the channel 321.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

## Claims

1. A device (310) for obtaining information concerning at least one external condition at a wind turbine (100), comprising
at least one capture element (320) suitable for being fixed at an upwind side of a rotor plane (140) of the wind turbine (100), wherein
- the at least one capture element (320) comprises at least one channel (321)
- with at least one opening (322) for obtaining the information at the upwind side of the rotor plane (140),
- a part (333) of the channel (321) with the at least one opening (322) substantially points towards a downwind direction (141) of the wind turbine (100),
- a longitudinal axis (340) of the part (333) of the channel (321) is substantially parallel to a rotation axis (142) of the rotor plane (140).

2. The device according to claim 1, wherein
the at least one capture element (320) comprises
- a pipe, or
- a tube, or
- a rod.

3. The device according to claim 1 or 2,
suitable to be fixed at a front side of a spinner (132) of the wind turbine (100).

4. The device according to any of the preceding claims,
wherein
the longitudinal axis (340) of the part (333) of the channel (321) is substantially parallel to a tilt angle of the wind turbine (100).

5. The device according to any of the preceding claims,
wherein the at least one capture element (320) is designed for capturing air via the at least one opening (322) at the upwind side of the rotor plane (140) and guiding the air along the at least one channel (321) towards at least one further opening (323) at the other end of the channel (321).

6. The device according to claim 5, comprising
at least one measurement device (431) communicating with the at least one further opening (323) of the at least one channel (321), the at least one measurement device (431) is suitable for providing measurement values concerning the at least one external condition based on the air provided via the at least one further opening (323) of the at least one channel (321).

7. The device according to claim 6, wherein
the at least one measurement device (431) is designed for providing measurement values concerning at least one out of the following external conditions:
- temperature,
- humidity,
- wind or air pressure,
- wind speed, or
- wind direction.

8. The device according to claim 6 or 7, wherein the at least one measurement device (431) comprises at least one sensor.

9. The device according to any of the preceding claims, comprising at least one heating element.

10. A system for obtaining information concerning at least one external condition at a wind turbine, comprising
- at least one device (310) according to any of the preceding claims 1 to 5,
- at least one measurement device (431) communicating with the at least one channel (321) of the at least one capture element (320),
- the at least one measurement device (431) is suitable for providing measurement values concerning the at least one external condition based on information provided via the at least one channel (321).

11. A wind turbine comprising
at least one device (310) according to any of the preceding claims 1 to 9.

12. A wind turbine comprising
at least one system according to claim 10.
